# EUROPEAN PATENT APPLICATION

(11) **EP 4 539 399 A1**
(43) Date of publication of application: **16.04.2025**
(21) Application number: 24206101.8
(22) Date of filing: 11.10.2024
(51) Int. Cl.: H04L 9/40, H04L 9/32, H04W 12/77

(54) **NETWORK DEVICE CERTIFICATE DEPLOYMENT USING SHORT-RANGE COMMUNICATIONS**

(30) Priority: 11.10.2023 US 202363543686 P; 09.10.2024 US 202418911095
(71) Applicant: Tyco Fire & Security GmbH, 8212 Neuhausen am Rheinfall, Schaffhausen (CH)
(72) Inventor: Logan, Simon, Schaffhausen (CH); Fee, Paul, Schaffhause (CH)
(74) Representative: Wright, Howard Hugh Burnby

(57) **Abstract**

Example aspects include a method performed by a newly-added device to a private network of a communication system. The method includes generating a self-signed digital certificate. The method further includes receiving, from a mobile configuration device, via a first short range wireless communication, a request for the self-signed digital certificate. The method also includes transmitting, in response to the request, via a second short range wireless communication, the self-signed digital certificate to the mobile configuration device. The method additionally includes performing, via the self-signed digital certificate, a handshake protocol with an existing device on the private network, the existing device having received the self-signed digital certificate from the mobile configuration device.

## Description

### CLAIM OF PRIORITY

The present application claims priority to U.S. Provisional Application No. 63/543,686, filed on October 11, 2023, and hereby incorporated herein by reference.

### BACKGROUND

In many contexts, the deployment of security certificates, such as Transport Layer Security (TLS) certificates, to network devices is essential for ensuring secure communication over communication networks. These certificates play a critical role in authenticating the identity of users, devices, or systems and maintaining the integrity of digital connections. Furthermore, digital certificates are often used to establish encrypted communication channels between digital entities. However, when new devices are added to a network, the new devices may be unable to conduct secure communications as there has not yet been an exchange of digital certificates. Further, transmitting digital certificates over unsecured communications can be susceptible to security threats, including man-in-the-middle (MITM) attacks, which compromise the integrity of communication and lead to unauthorized access to sensitive information or resources.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

An example aspect includes a method performed by a newly-added device to a private network of a communication system, the method comprising generating a self-signed digital certificate. The method further includes receiving, from a mobile configuration device, via a first short range wireless communication, a request for the self-signed digital certificate. Additionally, the method further includes transmitting, in response to the request, via a second short range wireless communication, the self-signed digital certificate to the mobile configuration device. Additionally, the method further includes performing, via the self-signed digital certificate, a handshake protocol with an existing device on the private network, the existing device having received the self-signed digital certificate from the mobile configuration device.

Another example aspect includes an apparatus performed by a newly-added device to a private network of a communication system, the method comprising one or more memories and one or more processors coupled with one or more memories and configured to perform, individually or in any combination, the follow actions. The one or more processors are configured to generate a self-signed digital certificate. The one or more processors are further configured to receive, from a mobile configuration device, via a first short range wireless communication, a request for the self-signed digital certificate. Additionally, the one or more processors are further configured to transmit, in response to the request, via a second short range wireless communication, the self-signed digital certificate to the mobile configuration device. Additionally, the one or more processors are further configured to perform, via the self-signed digital certificate, a handshake protocol with an existing device on the private network, the existing device having received the self-signed digital certificate from the mobile configuration device.

Another example aspect includes an apparatus performed by a newly-added device to a private network of a communication system, the method comprising means for generating a self-signed digital certificate. The apparatus further includes means for receiving, from a mobile configuration device, via a first short range wireless communication, a request for the self-signed digital certificate. Additionally, the apparatus further includes means for transmitting, in response to the request, via a second short range wireless communication, the self-signed digital certificate to the mobile configuration device. Additionally, the apparatus further includes means for performing, via the self-signed digital certificate, a handshake protocol with an existing device on the private network, the existing device having received the self-signed digital certificate from the mobile configuration device.

Another example aspect includes a computer-readable medium having instructions stored thereon performed by a newly-added device to a private network of a communication system, the computer-readable medium having instructions stored thereon comprising generate a self-signed digital certificate. The instructions are further executable to receive, from a mobile configuration device, via a first short range wireless communication, a request for the self-signed digital certificate. Additionally, the instructions are further executable to transmit, in response to the request, via a second short range wireless communication, the self-signed digital certificate to the mobile configuration device. Additionally, the instructions are further executable to perform, via the self-signed digital certificate, a handshake protocol with an existing device on the private network, the existing device having received the self-signed digital certificate from the mobile configuration device.

An example aspect includes a method performed by a newly-added device to a private network of a communication system, the method comprising transmitting, to a mobile configuration device, via a first short range wireless communication, a certificate signing request. The method further includes receiving, from the mobile configuration device, via a second short range wireless communication, a digital certificate generated by a certificate authority installed on the mobile configuration device. Additionally, the method further includes performing, via the digital certificate, a handshake protocol with an existing device on the private network, wherein the digital certificate is verifiable by the existing device using an issue certificate of the mobile configuration device.

Another example aspect includes an apparatus performed by a newly-added device to a private network of a communication system, the method comprising one or more memories and one or more processors coupled with one or more memories and configured to perform, individually or in any combination, the follow actions. The one or more processors are configured to transmit, to a mobile configuration device, via a first short range wireless communication, a certificate signing request. The one or more processors are further configured to receive, from the mobile configuration device, via a second short range wireless communication, a digital certificate generated by a certificate authority installed on the mobile configuration device. Additionally, the one or more processors are further configured to perform, via the digital certificate, a handshake protocol with an existing device on the private network, wherein the digital certificate is verifiable by the existing device using an issue certificate of the mobile configuration device.

Another example aspect includes an apparatus performed by a newly-added device to a private network of a communication system, the method comprising means for transmitting, to a mobile configuration device, via a first short range wireless communication, a certificate signing request. The apparatus further includes means for receiving, from the mobile configuration device, via a second short range wireless communication, a digital certificate generated by a certificate authority installed on the mobile configuration device. Additionally, the apparatus further includes means for performing, via the digital certificate, a handshake protocol with an existing device on the private network, wherein the digital certificate is verifiable by the existing device using an issue certificate of the mobile configuration device.

Another example aspect includes a computer-readable medium having instructions stored thereon performed by a newly-added device to a private network of a communication system, the computer-readable medium having instructions stored thereon comprising transmit, to a mobile configuration device, via a first short range wireless communication, a certificate signing request. The instructions are further executable to receive, from the mobile configuration device, via a second short range wireless communication, a digital certificate generated by a certificate authority installed on the mobile configuration device. Additionally, the instructions are further executable to perform, via the digital certificate, a handshake protocol with an existing device on the private network, wherein the digital certificate is verifiable by the existing device using an issue certificate of the mobile configuration device.

An example aspect includes a method performed by a mobile configuration device in a private network of a communication system, the method comprising receiving a certificate signing request from a newly-added device to the private network via a first short range wireless communication. The method further includes transmitting the certificate signing request to a certificate issuing device. Additionally, the method further includes receiving, from the certificate issuing device, based on the certificate signing request, a digital certificate generated by the certificate issuing device. Additionally, the method further includes transmitting the digital certificate to the newly-added device via a second short range wireless communication, wherein the digital certificate is configured to enable the newly-added device and an existing device on the private network to perform a handshake protocol based on the existing device verifying the digital certificate based on an issue certificate of the certificate issuing device.

Another example aspect includes an apparatus performed by a mobile configuration device in a private network of a communication system, the method comprising one or more memories and one or more processors coupled with one or more memories and configured to perform, individually or in any combination, the follow actions. The one or more processors are configured to receive a certificate signing request from a newly-added device to the private network via a first short range wireless communication. The one or more processors are further configured to transmit the certificate signing request to a certificate issuing device. Additionally, the one or more processors are further configured to receive, from the certificate issuing device, based on the certificate signing request, a digital certificate generated by the certificate issuing device. Additionally, the one or more processors are further configured to transmit the digital certificate to the newly-added device via a second short range wireless communication, wherein the digital certificate is configured to enable the newly-added device and an existing device on the private network to perform a handshake protocol based on the existing device verifying the digital certificate based on an issue certificate of the certificate issuing device.

Another example aspect includes an apparatus performed by a mobile configuration device in a private network of a communication system, the method comprising means for receiving a certificate signing request from a newly-added device to the private network via a first short range wireless communication. The apparatus further includes means for transmitting the certificate signing request to a certificate issuing device. Additionally, the apparatus further includes means for receiving, from the certificate issuing device, based on the certificate signing request, a digital certificate generated by the certificate issuing device. Additionally, the apparatus further includes means for transmitting the digital certificate to the newly-added device via a second short range wireless communication, wherein the digital certificate is configured to enable the newly-added device and an existing device on the private network to perform a handshake protocol based on the existing device verifying the digital certificate based on an issue certificate of the certificate issuing device.

Another example aspect includes a computer-readable medium having instructions stored thereon performed by a mobile configuration device in a private network of a communication system, the computer-readable medium having instructions stored thereon comprising receive a certificate signing request from a newly-added device to the private network via a first short range wireless communication. The instructions are further executable to transmit the certificate signing request to a certificate issuing device. Additionally, the instructions are further executable to receive, from the certificate issuing device, based on the certificate signing request, a digital certificate generated by the certificate issuing device. Additionally, the instructions are further executable to transmit the digital certificate to the newly-added device via a second short range wireless communication, wherein the digital certificate is configured to enable the newly-added device and an existing device on the private network to perform a handshake protocol based on the existing device verifying the digital certificate based on an issue certificate of the certificate issuing device.

An example aspect includes a method performed by a certificate issuing device in a private network of a communication system, the method comprising receiving a certificate signing request from a mobile configuration device, the certificate signing request generated by a newly-added device to the private network and transmitted to the mobile configuration device via a first short range wireless communication. The method further includes generating, in response to the certificate signing request, using an issue certificate of the certificate issuing device, a digital certificate for the newly-added device. Additionally, the method further includes transmitting the digital certificate to the mobile configuration device to be provided to the newly-added device via a second short range wireless communication, wherein the digital certificate is configured to enable the newly-added device and an existing device on the private network to perform a handshake protocol based on the existing device verifying the digital certificate based on the issue certificate of the certificate issuing device.

Another example aspect includes an apparatus performed by a certificate issuing device in a private network of a communication system, the method comprising one or more memories and one or more processors coupled with one or more memories and configured to perform, individually or in any combination, the follow actions. The one or more processors are configured to receive a certificate signing request from a mobile configuration device, the certificate signing request generated by a newly-added device to the private network and transmitted to the mobile configuration device via a first short range wireless communication. The one or more processors are further configured to generate, in response to the certificate signing request, using an issue certificate of the certificate issuing device, a digital certificate for the newly-added device. Additionally, the one or more processors are further configured to transmit the digital certificate to the mobile configuration device to be provided to the newly-added device via a second short range wireless communication, wherein the digital certificate is configured to enable the newly-added device and an existing device on the private network to perform a handshake protocol based on the existing device verifying the digital certificate based on the issue certificate of the certificate issuing device.

Another example aspect includes an apparatus performed by a certificate issuing device in a private network of a communication system, the method comprising means for receiving a certificate signing request from a mobile configuration device, the certificate signing request generated by a newly-added device to the private network and transmitted to the mobile configuration device via a first short range wireless communication. The apparatus further includes means for generating, in response to the certificate signing request, using an issue certificate of the certificate issuing device, a digital certificate for the newly-added device. Additionally, the apparatus further includes means for transmitting the digital certificate to the mobile configuration device to be provided to the newly-added device via a second short range wireless communication, wherein the digital certificate is configured to enable the newly-added device and an existing device on the private network to perform a handshake protocol based on the existing device verifying the digital certificate based on the issue certificate of the certificate issuing device.

Another example aspect includes a computer-readable medium having instructions stored thereon performed by a certificate issuing device in a private network of a communication system, the computer-readable medium having instructions stored thereon comprising receive a certificate signing request from a mobile configuration device, the certificate signing request generated by a newly-added device to the private network and transmitted to the mobile configuration device via a first short range wireless communication. The instructions are further executable to generate, in response to the certificate signing request, using an issue certificate of the certificate issuing device, a digital certificate for the newly-added device. Additionally, the instructions are further executable to transmit the digital certificate to the mobile configuration device to be provided to the newly-added device via a second short range wireless communication, wherein the digital certificate is configured to enable the newly-added device and an existing device on the private network to perform a handshake protocol based on the existing device verifying the digital certificate based on the issue certificate of the certificate issuing device.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram a first system for network device certificate deployment using short-range communications, according to some implementations.
FIG. 2 is a block diagram a second system for network device certificate deployment using short-range communications, according to some implementations.
FIG. 3 is a block diagram a third system for network device certificate deployment using short-range communications, according to some implementations.
FIG. 4 is a flow diagram of an example of a first method of network device certificate deployment using short-range communications, according to some implementations.
FIG. 5 is a flow diagram of an example of a second method of network device certificate deployment using short-range communications, according to some implementations.
FIG. 6 is a flow diagram of an example of a third method of network device certificate deployment using short-range communications, according to some implementations.
FIG. 7 is a flow diagram of an example of a fourth method of network device certificate deployment using short-range communications, according to some implementations.
FIG. 8 is a flow diagram of an example of a fifth method of network device certificate deployment using short-range communications, according to some implementations.
FIG. 9 is a flow diagram of an example of a sixth method of network device certificate deployment using short-range communications, according to some implementations.
FIG. 10 is block diagram of an example of a newly added device configured to implement a system for network device certificate deployment using short-range communications, according to some implementations.
FIG. 11 is block diagram of an example of a mobile configuration device configured to implement a system for network device certificate deployment using short-range communications, according to some implementations.
FIG. 12 is block diagram of an example of a certificate issuing device configured to implement a system for network device certificate deployment using short-range communications, according to some implementations.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Implementations of the present disclosure provide network device certificate deployment using short-range communications. In some implementations, one problem solved by the present solution is establishing initial trust when deploying digital certificates to network devices. For example, in a man-in-the-middle (MITM) attack scenario involving public-key cryptography and key exchanges, an eavesdropper intercepts the public key of a first device when the public key is sent to a second device. The eavesdropper then sends a malicious message to the second device, pretending to be the first device, and includes the eavesdropper's own public key. The second device, unaware of the interception, sends a message encrypted with the eavesdropper's key back to the first device. The eavesdropper decrypts and re-encrypts the message using the first device's public key before sending the message back to the first device. In this way, neither device realizes that an attacker is altering their messages. This emphasizes the need for robust authentication methods and secure communication protocols to mitigate risks associated with certificate deployment and trust establishment in digital and/or wireless communication environments.

The present disclosure describes systems, devices, and methods that utilize short-range communications to exchange digital certificates, where these techniques provide improved security over conventional techniques of certificate deployment by reducing the risk of attacks, e.g., man in the middle attacks (MITM), on key exchange via digital certificate deployment. In particular, the physical proximity between communicating network devices associated with the use of a short-range communication technology assists in ensuring that a proposed certificate is genuinely coming from the intended device and received, without interception, by the target device. As a result, this innovative approach to establishing trust between network devices can significantly enhance the overall security and reliability of digital and/or wireless communication environments, providing a more robust and scalable solution for managing network devices and network device access to sensitive information and resources.

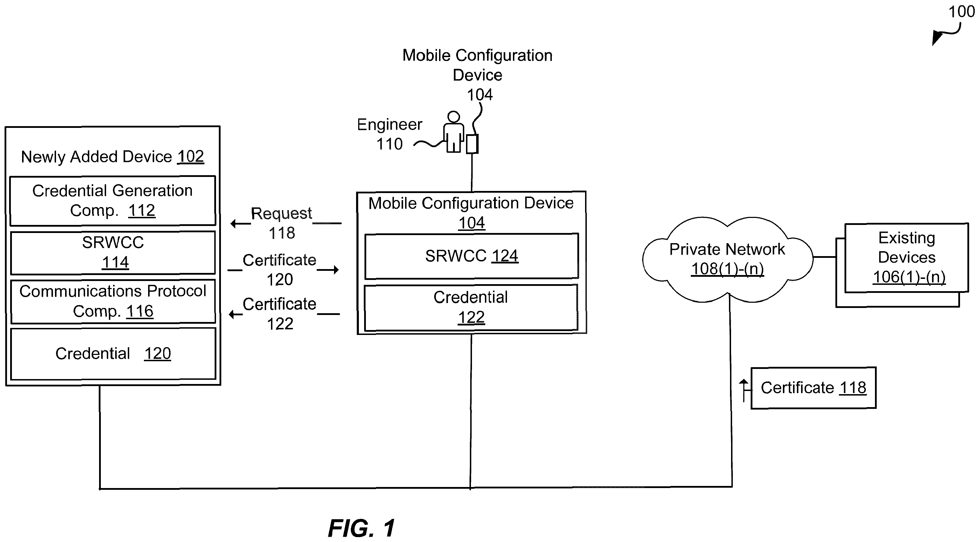

Referring to FIG. 1, in one non-limiting aspect, a communication system 100 is configured to provide network device certificate deployment using short-range communications. Short-range communications include communication technologies including, but not limited to, near field communication (NFC), Bluetooth^{®}, Zigbee^{®}, radio frequency identification (RFID), Wi-Fi Direct^{®}, LiFi, Chirp, and PowerG, and/or any other type of wireless communication technology having a communication range of equal to or less than about 10 meters. The communication system 100 may include one or more newly-added devices 102, a mobile configuration device 104, one or more existing devices 106, and a private network 108. A newly-added device 102 includes, but is not limited to, a device such as a video capture device, a smartphone, a computing device, a wearable device, an Internet of Things (IoT) device, a video game system, a robot, a process automation equipment, a control device, a vehicle, a transportation equipment, and a virtual and augmented reality (VR and AR) device and/or any device that is seeking to join and/or communicate with other devices in communication system 100. On the other hand, an existing device 106 includes, but is not limited to, a video recording device, and/or any device already enabled to communication with other devices in communication system 100. The mobile configuration device 104 includes, but is not limited to, a device such as a smartphone, a computing device, a wearable device, an Internet of Things (IoT) device, and a control device and/or any device used to configure a newly-added device for use in a network including a private network requiring credentials (password, signature, certificate, code, etc.) to join. In some examples, the communication system 100 may be a video monitoring system where the newly-added devices 102 are video capture devices that record vides and/or photos of an environment, referred to as video capture information, and the one or more existing devices 106 include edge servers that manage storage of video capture information from the video capture devices and client devices that may be used by monitoring personnel view the video capture information.

Some examples of the newly-added devices 102 and the existing devices include video capture devices, smartphones, computing devices, wearable devices, Internet of Things (IoT) devices, video game systems, robots, process automation equipment, control devices, vehicles, transportation equipment, and virtual and augmented reality (VR and AR) devices. Some examples of the mobile configuration device 104 include smartphones, computing devices, wearable devices, Internet of Things (IoT) devices, and control devices. In some implementations, the private network 108 is a communication network that requires credentials such as a password, signature, certificate, code, and so forth that are non-public and intended to be known only by members of the network, and may include a radio network, a cellular network, one or more of a wired and/or wireless private network, personal area network (e.g., short-range wireless connectivity), and/or local area network. Further, in some aspects, the one or more newly-added devices 102(1)-(n), the mobile configuration device 104, and the one or more existing devices 106(1)-(n) may be configured to communicate via the private network 108.

In some aspects, an engineer/technician/other personnel 110 may endeavor to configure the newly-added device 102(1) to securely communicate over the private network 108 with the one or more existing devices 106(1)-(n). For example, the engineer 110 may endeavor to configure a video capture device to securely transmit video capture information captured by the video capture device to one or more edge servers via the private network 108 using one or more secure communication protocols, such as but not limited to, Transport Layer Security (TLS), Datagram Transport Layer Security (DTLS), Internet Protocol security (IPsec), and Secure Shell (SSH). As illustrated in FIG. 1, the newly-added device 102 may include a credential generation component 112, one or more short-range wireless communication components (SRWCC) 114, and a communications protocol component 116. In some aspects, the credential generation component 112 is a hardware device and/or software instructions configured to generate a self-signed digital certificate 120 (e.g., a TLS certificate) that identifies the newly-added device 102. In some aspects, a digital certificate, such as the self-signed digital certificate 120, enables secure communication between electronic devices over the private network 108. For example, a digital certificate, such as the self-signed digital certificate 120, may provide authentication, data integrity, identity information of the newly-added device 102, and/or encryption capabilities that ensures that sensitive information is transmitted securely between electronic devices over the private network 108. The SRWCC 114 includes, but is not limited to, a receiver, a transmitter, a transceiver, and/or any other type of hardware and/or software configured to receive and/or transmit information. The communications protocol component 116 includes, but is not limited to, one or more processors, and one or more memories, and/or any other type of hardware and/or software configured to generate a certificate capable of identifying a newly-added device to a network.

In some aspects, a digital certificate, such as the self-signed digital certificate 120, may include a public key of the newly-added device 102, which is used by other devices to encrypt data before sending the data to the newly-added device 102. The newly-added device 102 may then use the private key of the newly-added device 102 to decrypt the data. Further, as described herein, in some aspects, a newly-added device 102 and an existing device 106 may perform a handshake (e.g., TLS handshake) using the digital certificate 120 to establish a secure communication channel for exchanging data. For example, information such as a unique string of characters included in the digital certificate 120 of the newly-added device 102 may be compared to information such as a unique string of characters included in the digital certificate of the existing device 106 in order to verify the identity of the newly-added device 102.

It is unlikely that both a newly-added device 102 and an existing device are aware of any unique information ahead of first contact between them. Such "secrets" could eventually be learnt by attackers. Instead, aspects of the disclosure use short range communication as a way of limiting attacks and conversely of establishing trust. The new device (newly-added device 102) creates its own key pair seeded from a random number generator. Trust of this new device is indicated by signing its certificate (which incorporates the public key). With trust established, the new device (newly-added device 102) can then be reached via a more hostile environment, i.e., non-short-range connectivity where attackers are more likely to reside. Once on the hostile network, the secure communications are used, leveraging the trust established via aspects of the present disclosure.

The one or more short-range wireless communication components 114 facilitate the exchange of the self-signed digital certificate 120 between the newly-added device 102 and the mobile configuration device 104 via short-range communications. Specifically, in some aspects, a short-range wireless communication component 114 receives a request (e.g., a certificate signing request) for the self-signed digital certificate 120 from the mobile configuration device 104. Additionally, a short-range wireless communication component 114 transmits the self-signed digital certificate 120 to the mobile configuration device 104 in response to the request. Further, in some aspects, the newly-added device 102 receives a digital certificate 122 (e.g., a mutual TLS certificate, a DTLS certificate, an IPsec certificate, or a SSH certificate) from the mobile configuration device 104. In some aspects, the newly-added device 102 and the mobile configuration device 104 perform mutual authentication using the digital certificates 120 and 120 wherein each of the devices authenticates the other device using some shared information.

In some aspects, the one or more short-range wireless communication components 114 may include near field communication (NFC), Bluetooth^{®}, Zigbee^{®}, radio frequency identification (RFID), Wi-Fi Direct^{®}, LiFi, and PowerG transmitters, receivers, and/or transceivers. In some aspects, short-range wireless communication, as used herein, refers to the transmission of data over relatively small distances (10 meters or less) using wireless technologies. Short-range wireless communication methods are designed for low power consumption, low data rates, and minimal infrastructure requirements as compared to long-range wireless communications that typically require high power consumption, high data rates, and considerable infrastructure requirements. NFC is a short-range wireless communication technology that allows two devices to exchange data when they are brought within close proximity, usually a few centimeters apart. NFC is commonly used for contactless payment systems, access control, and sharing data between smartphones. Bluetooth° is a widely-used wireless technology that enables data exchange between devices over short distances, typically up to 10 meters (33 feet). Zigbee° is a low-power, low-data-rate wireless communication protocol designed for home automation, industrial control, and other IoT applications. Zigbee° devices typically have a range of up to 100 meters (328 feet) and can form mesh networks to extend their communication range. Radio Frequency Identification (RFID) is a wireless communication technology that uses radio waves to identify and track objects. RFID tags, which can be attached to various items, contain a small antenna and an integrated circuit that stores information. RFID readers transmit radio signals to the tags, which then respond with the stored information. The communication range of RFID systems can vary from a few centimeters to several meters, depending on the type of tag and reader. Wi-Fi Direct^{®} is a peer-to-peer wireless communication technology that allows Wi-Fi-enabled devices to connect directly to each other without the need for a central access point or router. Wi-Fi Direct^{®} can operate at similar distances as traditional Wi-Fi networks. PowerQ^{™} is another short-range wireless communication technology that enables the exchange of data between devices over limited distances. PowerQ^{™} is designed for energy-efficient communication in applications such as smart homes, IoT devices, and industrial automation systems. LiFi is a wireless technology that uses light as the transmission medium.

In some aspects, the newly-added device 102 may use the same short-range wireless communication component 114 for receiving the request 118 for the self-signed digital certificate 120 and transmitting the self-signed digital certificate 120. Further, in some other aspects, the newly-added device 102 may use different short-range wireless communication components 114 for receiving the request 118 for the self-signed digital certificate 120 and transmitting the self-signed digital certificate 120. For example, the newly-added device 102 may receive a request for the self-signed digital certificate 120 from the mobile configuration device 104 via a Bluetooth^{®} component and transmit the self-signed digital certificate 120 to the mobile configuration device 104 via an NFC component. In some instances, using different short-range wireless communication components 114 may frustrate an attack that has compromised a communication channel associated with one of the short-range wireless communication components 114.

Upon request and receipt of the self-signed digital certificate 120 via one or more short-range wireless communication components 124 of the mobile configuration device 104, the mobile configuration device 104 may distribute the self-signed digital certificate 120 to the existing devices 106. For example, the mobile configuration device 104 may transmit the self-signed digital certificate 120 to the existing devices 106 via the private network 108. Further, the communications protocol component 116 of the newly-added device 102 may perform a handshake protocol with an existing device 106 using the self-signed digital certificate 120 to establish a secure communication channel between the newly-added device 102 and the existing device 106 on the private network 108. In some aspects, the handshake protocol is a TLS handshake protocol that establishes a TLS communication channel (e.g., a hypertext transfer protocol secure (HTTPS) connection) between a newly-added device 102 and an existing device 106. In other aspects, other types of communication channels can be established, for example, via DTLS, IPsec, or SSH

Additionally, in some aspects, the newly-added device 102 and the mobile configuration device 104 exchange additional information, out of band to the request for the digital certificate 120 (that is, using a different short range wireless communication transmission or using a different short range wireless communication technique, e.g., NFC versus BLUETOOTH), that may be used to authenticate the newly-added device 102 and verify that the digital certificate 120 is provided by the newly-added device 102 and not an MITM attacker. For example, the mobile configuration device 104 may display a code (e.g., QR code) or the digital certificate 122 to the newly added device in another band (i.e., using a different short range wireless communication transmission or using a different short range wireless communication technique) with respect to a preceding short range wireless communication transmission and determine whether to accept the certificate 120 for distribution based on use of the code or the digital certificate 122 by the newly-added device.

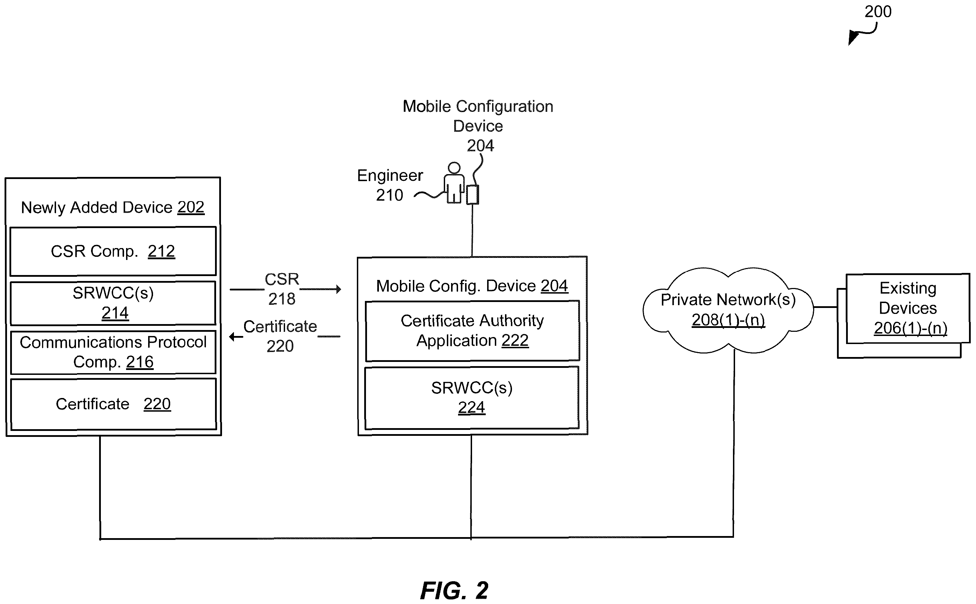

Referring to FIG. 2, in one non-limiting aspect, a communication system 200 is configured to provide network device certificate deployment using short-range communications. The communication system 200 may include one or more newly-added devices 202, a mobile configuration device 204, one or more existing devices 206, and a private network 208. In some examples, the communication system 200 may be a video monitoring system where the newly-added devices 202 are video capture devices, and the one or more existing devices 206 include edge servers that manage storage of video capture information from the video capture devices and client devices that may be used by monitoring personnel view the video capture information.

Some examples of the newly-added devices 202 and the existing devices 206 include video capture devices, smartphones, computing devices, wearable devices, Internet of Things (IoT) devices, video game systems, robots, process automation equipment, control devices, vehicles, transportation equipment, and virtual and augmented reality (VR and AR) devices. Some examples of the mobile configuration device 204 include smartphones, computing devices, wearable devices, Internet of Things (IoT) devices, and control devices. In some implementations, the private network 208 may include a radio network, a cellular network, one or more of a wired and/or wireless private network, personal area network (e.g., short-range wireless connectivity), and/or local area network. Further, in some aspects, the one or more newly-added devices 202(1)-(n), the mobile configuration device 204, and the one or more existing devices 206(1)-(n) may be configured to communicate via the private network 208.

In some aspects, an engineer/technician/other personnel 210 may endeavor to configure the newly-added device to securely communicate over the private network 208. For example, the engineer 210 may endeavor to configure a video capture device to securely transmit video capture information captured by the video capture device to one or more edge servers via the private network 208 using TLS. As illustrated in FIG. 2, the newly-added device 202 may include a certificate signing request (CSR) component 212, one or more short-range wireless communication components 214, and a communications protocol component 216.

In some aspects, the CSR component 212 generates a certificate signing request 218 for the newly-added device 202. The short-range wireless communication components 214 facilitate the exchange of the CSR 218 and a digital certificate 220 between the newly-added device 202 and the mobile configuration device 204. Specifically, in some aspects, a short-range wireless communication component 214 transmits the CSR 218 to the mobile configuration device 204. Additionally, the short-range wireless communication component 214 receives the digital certificate 220, generated by a certificate authority application 222 installed on the mobile configuration device 204, from the mobile configuration device 204. In some aspects, the digital certificate 220 may enable secure communication between electronic devices over the private network 108. For example, a digital certificate 220 may provide authentication, data integrity, and encryption that ensures that sensitive information is transmitted securely between electronic devices over the private network 208. In some aspects, the digital certificate 220 may include a public key of the newly-added device 202, which is used by other devices to encrypt data before sending it to the newly-added device 202. The newly-added device 202 then uses the corresponding private key to decrypt the data. The digital certificate 220 may also include information about the identity of the newly-added device 202. For example, the digital certificate 220 may include a domain name, organization details, a validity period of the digital certificate 220, and a digital signature of the certificate authority application 222 that issued the digital certificate 220. Further, as described herein, in some aspects, a newly-added device 202 and an existing device 206 may perform a handshake protocol (e.g., TLS handshake) using the digital certificate 220 to establish a secure communication channel for exchanging data. Prior to performing the handshake protocol, the existing device 206 may determine whether to perform the handshake protocol with the newly-added device 202 based on verifying the digital signature of the certificate authority application 222.

In some aspects, the one or more short-range wireless communication components 214 may include NFC, Bluetooth^{®}, Zigbee^{®}, RFID, Wi-Fi Direct^{®}, LiFi, Chirp, and PowerG components. In some aspects, the newly-added device 102 may use the same short-range wireless communication component 214 for transmitting the CSR 218 and receiving the digital certificate 220. Further, in some other aspects, the newly-added device 202 may use different short-range wireless communication components 214 for transmitting the CSR 218 and receiving the digital certificate 220. For example, the newly-added device 202 may transmit the CSR 218 to the mobile configuration device 204 via a Bluetooth^{®} component and receive the digital certificate 220 from the mobile configuration device 204 via an NFC component. In some instances, using different short-range wireless communication components 214 may frustrate an attack that has compromised a communication channel associated with one of the short-range wireless communication components 214.

Upon receipt of the digital certificate, the newly-added device 202 may establish a secure communication channel with one of the existing devices 206. For example, the communications protocol component 216 may perform a handshake protocol with an existing device 206 using the digital certificate 220 to establish a secure communication channel between the newly-added device 202 and the existing device 206 via the private network 208. As described herein, in some aspects, the existing device 206 verifies the digital certificate 220 based on an issuing certificate (e.g., a root certificate) of the mobile configuration device 204 and/or a digital signature of the mobile configuration device 204. In some aspects, the handshake protocol may be a TLS handshake protocol that establishes a TLS communication channel between a newly-added device 202 and an existing device 206.

As illustrated in FIG. 2, in some aspects, the mobile configuration device 204 may include a certificate authority application 222 configured to manage and maintain the security and integrity of digital certificates within a public key infrastructure (PKI). In some aspects, the certificate authority application 222 ensures secure communication and transactions over the private network 208 by verifying the identity of newly-added devices 202 and the existing devices 206, and establishing trust between parties involved in data exchange. For example, the certificate authority application 222 may perform identity verification, certificate issuance, certificate revocation, certificate renewal, and root certificate management. Further, the mobile configuration device 204 may include one or more short-range wireless communication components 224. Further, the mobile configuration device 204 may employ the one or more short-range wireless communication components 224 to receive the CSR 218 from the newly-added device and transmit the CA signed digital certificate 220 to the newly-added device 202.

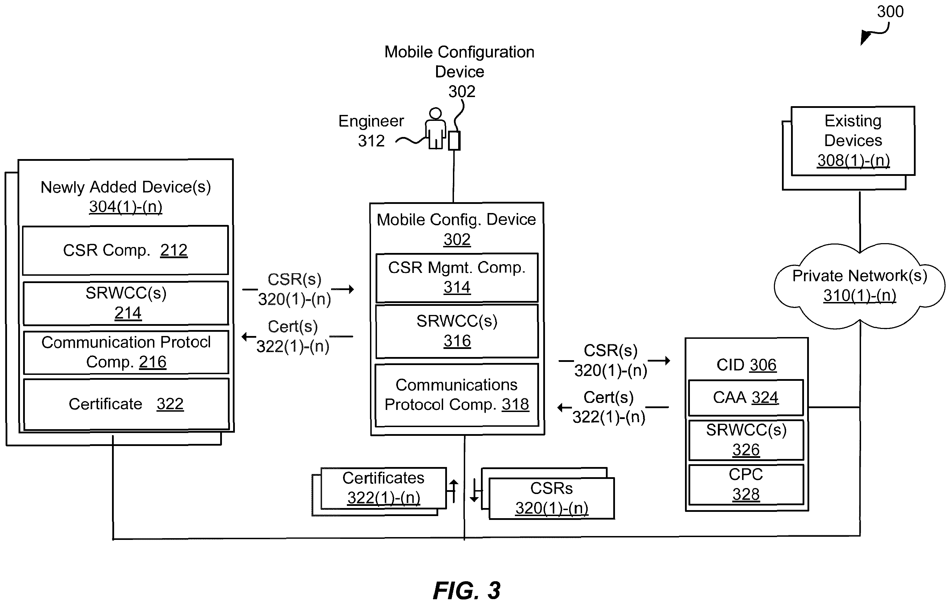

Referring to FIG. 3, in one non-limiting aspect, a communication system 300 is configured to provide network device certificate deployment using short-range communications. The communication system 300 includes a mobile configuration device 302, one or more newly-added devices 304, a certificate issuing device (CID) 306, one or more existing devices 308, and a private network 310. In some examples, the communication system 300 may be a video monitoring system where the newly-added devices 304 are video capture devices, and the one or more existing devices 308 include servers that manage storage of video capture information from the video capture devices and client devices that may be used by monitoring personnel to view the video capture information.

Some examples of the newly-added devices 304 and the existing devices 308 include video capture devices, smartphones, computing devices, wearable devices, Internet of Things (IoT) devices, video game systems, robots, process automation equipment, control devices, vehicles, transportation equipment, and virtual and augmented reality (VR and AR) devices. Some examples of the mobile configuration device 302 include smartphones, computing devices, wearable devices, Internet of Things (IoT) devices, and control devices. In some implementations, the private network 310 may include a radio network, a cellular network, one or more of a wired and/or wireless private network, personal area network (e.g., short-range wireless connectivity), and/or local area network. Further, in some aspects, the mobile configuration device 302, the one or more newly-added devices 304(1)-(n), the certificate issuing device 306, and the one or more existing devices 308(1)-(n) may be configured to communicate via the private network 310.

In some aspects, an engineer/technician/other personnel 312 may endeavor to configure one or more newly-added devices 304 to securely communicate over the private network 310. For example, the engineer 312 may endeavor to configure a video capture device to securely transmit video capture information captured by the video capture device to one or more edge servers via the private network 310 using TLS. As illustrated in FIG. 3, the mobile configuration device 302 may include a certificate signing request (CSR) management component 314, one or more short-range wireless communication components 316, and a communications protocol component 318.

In some aspects, the CSR management component 314 receives a certificate signing request (CSR) 320 from the newly-added device 304 via a short range communication, and transmits the CSR 320 to the certificate issuing device 306. Further, the CSR management component 314 receives a digital certificate 322 for the newly-added device 304 from the certificate issuing device 306 via the private network 310, and transmits the digital certificate 322 to the newly-added device 304 via a short-range wireless communication. In some other aspects, the CSR management component 314 receives a plurality of certificate signing requests (CSRs) 320 from the newly-added devices 304 via separate short range wireless communications to avoid a MITM attack, and transmits the CSRs 320 to the certificate issuing device 306 via a short range wireless communication to avoid a MITM attack. Further, the CSR management component 314 receives digital certificates 322 for each of the newly-added device 304 from the certificate issuing device 306 via a short-range wireless communication to avoid a MITM attack, and transmits the digital certificates 322 to the plurality of newly-added devices 304 via separate short-range wireless communications.

The short-range wireless communication components 316 facilitate the exchange of the CSR 320 and the digital certificate 322 between the newly-added device 304 and the mobile configuration device 302. Specifically, in some aspects, a short-range wireless communication component 316 receives the CSR from the newly-added device 304. Additionally, a short-range wireless communication component 316 transmits the digital certificate 322 to the newly-added device 304 in response to the receipt of the digital certificate from the certificate issue device 306. Further, in some aspects, the short-range wireless communication components 316 facilitate the exchange of the CSRs 320 and the digital certificates 322 between the mobile configuration device 302 and the certificate issuing device 306.

In some aspects, as described herein, the digital certificate 322 may enable secure communication between electronic devices over the private network 310. Further, the digital certificate 322 may include a domain name, organization details, a validity period of the digital certificate, and a digital signature of the certificate issuing device 306 that issued the digital certificate 322. Additionally, as described herein, in some aspects, a newly-added device 304 and an existing device 308 may perform a handshake protocol (e.g., TLS handshake) using the digital certificate 322 to establish a secure communication channel for exchanging data. Further, prior to performing the handshake protocol, the existing device 308 may determine whether to perform the handshake protocol with the newly-added device based on verifying the digital signature of the certificate issuing device 306.

In some aspects, the one or more short-range wireless communication components 316 may include NFC, Bluetooth^{®}, Zigbee^{®}, RFID, Wi-Fi Direct^{®}, LiFi, Chirp, and PowerG components. In some aspects, the mobile configuration device 302 may use the same short-range wireless communication component 316 for receiving the CSR 320 and transmitting the digital certificate 322. Further, in some aspects, the mobile configuration device 302 may use different short-range wireless communication components 316 for receiving the CSR 218 and transmitting the digital certificate 322. For example, the mobile configuration device 302 may receive the CSR 320 from the newly-added device 304 via a Bluetooth^{®} component and transmit the digital certificate 322 from to the mobile configuration device 302 via an NFC component. In some instances, using different short-range wireless communication components 316 may frustrate an attack that has compromised a communication channel associated with one of the short-range wireless communication components 214.

Upon receipt of the digital certificate 322, the newly-added device 304 may establish a secure communication channel with one of the existing devices 308. For example, the newly-added device 304 may perform a handshake protocol with an existing device 308 using the digital certificate 322 to establish a secure communication channel between the newly-added device 304 and the existing device 308 via the private network 310. As described herein, in some aspects, the existing device 308 verifies the digital certificate 322 using an issuing certificate of the certificate issuing device 306 and/or a digital signature of the certificate issuing device 206. In some aspects, the handshake protocol may be a TLS handshake protocol that establishes a TLS communication channel between a newly-added device 304 and an existing device 308. As illustrated in FIG. 3, the newly added devices 304(1)-(n) may include a certificate signing request component 212, one or more short-range wireless communication components 214, and a communications protocol component 216, as described in detail herein. For example, the certificate signing request component 212 may generate a CSR 320, and the short-range wireless communication components 214 may transmit the CSR 320 to the mobile configuration device 302. Further, the short-range wireless communication components 214 may receive the certificate 322 from the mobile configuration device 302.

As illustrated in FIG. 3, in some aspects, the certificate issuing device 306 may include a certificate authority application 324 configured to manage and maintain the security and integrity of digital certificates within a public key infrastructure (PKI). In some aspects, the certificate authority application 324 ensures secure communication and transactions on the over the private network 310 by verifying the identity of newly-added devices 304 and the existing devices 308, and establishing trust between parties involved in data exchange. For example, the certificate authority application 324 may perform identity verification, certificate issuance, certificate revocation, certificate renewal, and root certificate management. Additionally, the certificate issuing device 306 may include one or more short-range wireless communication components 326. Further, the certificate issuing device 306 may employ the one or more short-range wireless communication components 326 to receive the CSRs 320 from the mobile configuration device 302 and transmit the digital certificates 322 to the newly-added device 304. Further, in some aspects, the certificate issuing device 306 may include a communications protocol component 328. Additionally, in some aspects, the certificate issuing device 306 may employ the communications protocol component 328 to receive the CSRs 320 from the mobile configuration device 302 and transmit the digital certificates 322 to the mobile configuration device 302. For example, the certificate issuing device 306 and the mobile configuration device 302 may employ the communications protocol component (CPC) 328 and the communications protocol component 318, respectively, to establish TLS communication sessions to communicate the CSRs 320 and the digital certificates 322.

Further, as illustrated in FIG. 3, in some aspects, the certificate issuing device 306 receives CSRs 320 from the mobile configuration device 302, which are generated by the newly-added devices 304 and transmitted to the mobile configuration device 302 via short-range wireless communications. In response to receipt of a CSR 320, the certificate issuing device 306 generates a digital certificate 322 for the newly-added device 304 using an issue certificate (e.g., the certificate authority application 324 generates a digital signature using an issue certificate and appends the digital signature to the digital certificate 322). As used herein, in some aspects, an issue certificate may refer to a public key certificate that identifies a root or intermediate certificate authority configured to issue certificates. The certificate issuing device 306 then transmits the digital certificate 322 to the mobile configuration device 302, which in turn provides the digital certificate 322 to the newly-added device 304 via a second short-range wireless communication. By performing these methods together, the mobile configuration device 302 and the certificate issuing device 306 can streamline the process of securely adding new devices to a private network 310, and ensuring secure communication between the newly-added devices 304 and the existing devices 308. As described above, in some aspects, the certificate issuing device 306 then transmits the digital certificate 322 to the mobile configuration device 302 via short-range wireless communications to avoid a MITM attack.

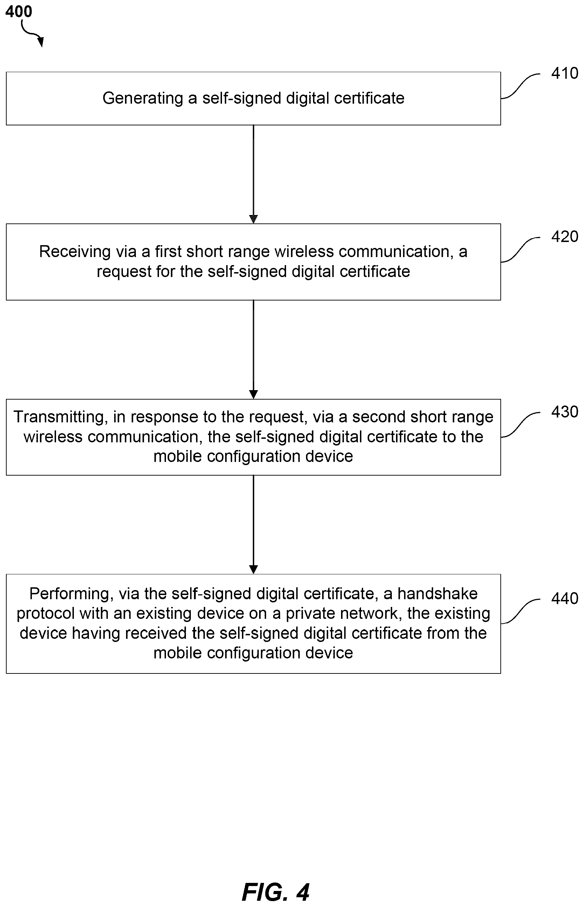

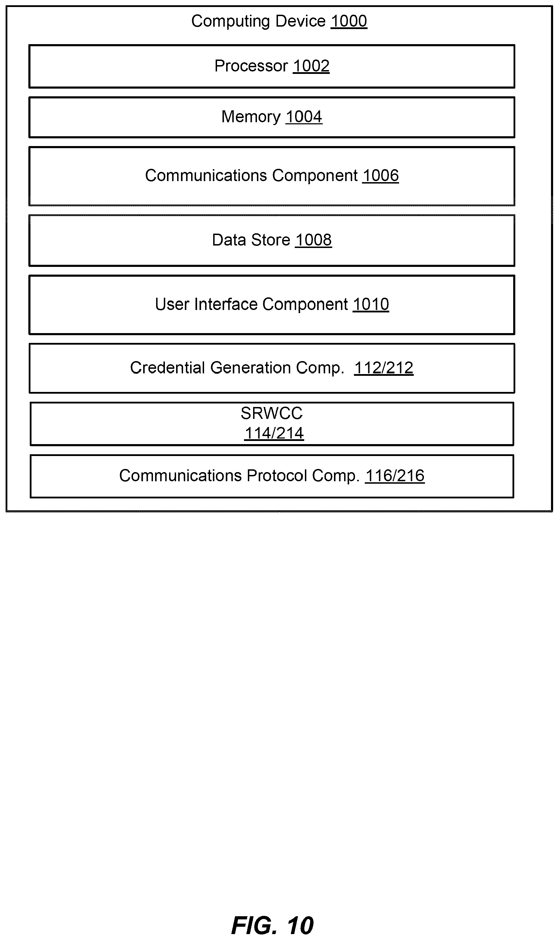

Referring to FIG. 4, in operation, the newly-added device or the computing device 1000 may perform an example method 400 for providing network device certificate deployment using short-range communications. The method 400 may be performed by one or more components of the newly-added device 102, the computing device 1000, or any device/component described herein according to the techniques described with reference to FIGS. 1 and 10.

At block 402, the method 400 includes generating, by a newly-added device to a private network, a self-signed digital certificate. For example, the newly-added device 102 generates a self-signed digital certificate 120 that identifies the newly-added device 102. Accordingly, the newly-added device 102, the computing device 1000, and/or the processor(s) 1002 executing the credential generation component may provide means for generating, by a newly-added device to a private network, a self-signed digital certificate.

At block 404, the method includes receiving, by the newly-added device from a mobile configuration device, via a first short range wireless communication, a request for the self-signed digital certificate. For example, the newly-added device 102 may receive a certificate request from the mobile configuration device 104 for the self-signed digital certificate 120. Accordingly, the newly-added device 102, the computing device 1000, and/or the processor(s) 1002 executing the short-range wireless communication components 114 may provide means for receiving, by the newly-added device from a mobile configuration device, via a first short range wireless communication, a request for the self-signed digital certificate.

At block 406, the method includes transmitting, by the newly-added device in response to the request, via a second short range wireless communication, the self-signed digital certificate to the mobile configuration device. For instance, the newly-added device 102 may transmit the self-signed digital certificate to the mobile configuration device using Bluetooth, NFC, or another suitable short-range wireless communication technology. Accordingly, the newly-added device 102, the computing device 1000, and/or the processor(s) 1002 executing the short-range wireless communication components 114 may provide means for transmitting, by the newly-added device in response to the request, via a second short range wireless communication, the self-signed digital certificate to the mobile configuration device.

At block 408, the method includes performing, via the self-signed digital certificate, a handshake protocol with an existing device on a private network, the existing device having received the self-signed digital certificate from the mobile configuration device. For example, the newly-added device 102 may perform a TLS handshake with an existing device 106 to establish a secure communication channel between the newly-added device 102 and the existing device 106 on the private network 108. Accordingly, the newly-added device 102, the computing device 1000, and/or the processor(s) 1002 executing the short-range wireless communication components 114 and the communications protocol component 116 may provide means for performing the handshake protocol with the self-signed digital certificate.

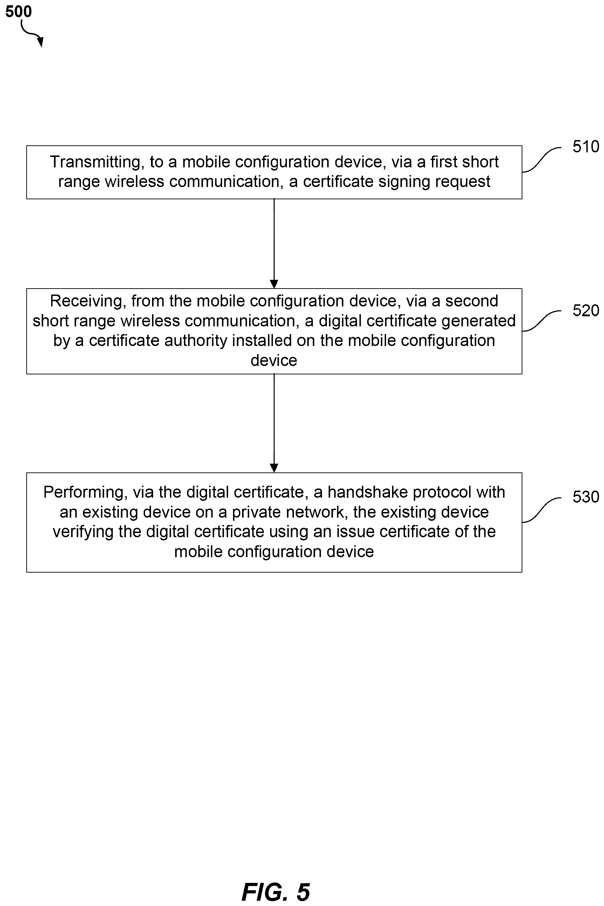

Referring to FIG. 5, in operation, the newly-added device 202 or the computing device 1000 may perform an example method 500 for providing network device certificate deployment using short-range communications. The method 500 may be performed by one or more components of the newly-added device 202, the computing device 1000, or any device/component described herein according to the techniques described with reference to FIGS. 1 and 10.

At block 502, the method includes transmitting, to a mobile configuration device, via a first short range wireless communication, a certificate signing request. For example, the newly-added device 202 may generate a certificate signing request 218 and transmit the certificate signing request 218 to the mobile configuration device 204 using the short-range wireless communication component. Accordingly, the newly-added device 202, the computing device 1000, and/or the processor(s) 1002 executing the CSR component 212 and the short-range wireless communication components 214 may provide means for transmitting the certificate signing request to the mobile configuration device.

At block 504, the method includes receiving, from the mobile configuration device, via a second short range wireless communication, a digital certificate generated by a certificate authority installed on the mobile configuration device. For example, the newly-added device 202 may receive a digital certificate 220 from the mobile configuration device 204, which is generated by a certificate authority application 222 installed on the mobile configuration device. Accordingly, the newly-added device 202, the computing device 1000, and/or the processor(s) 1002 executing the short-range wireless communication components 214 may provide means for receiving the digital certificate from the mobile configuration device.

At block 506, the method 500 includes performing, via the digital certificate, a handshake protocol with an existing device on a private network, the existing device verifying the digital certificate using an issue certificate of the mobile configuration device. For example, the newly-added device 202 may perform a handshake protocol, such as a TLS handshake, with an existing device 206 to establish a secure communication channel between the newly-added device 202 and the existing device 206 via the private network 208. Accordingly, the newly-added device 202, the computing device 1000, and/or the processor(s) 1002 executing the communications protocol component 216 may provide means for performing, via the digital certificate, a handshake protocol with an existing device on a private network.

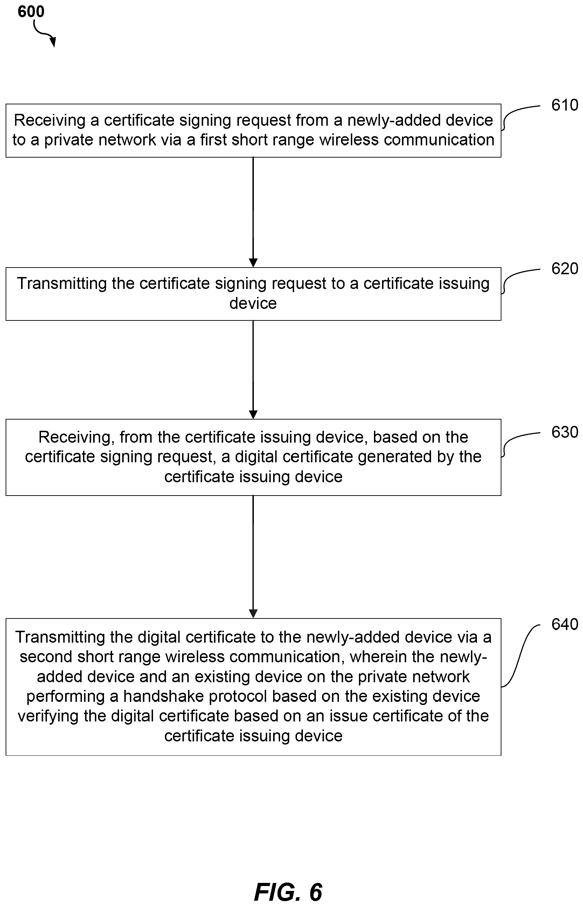

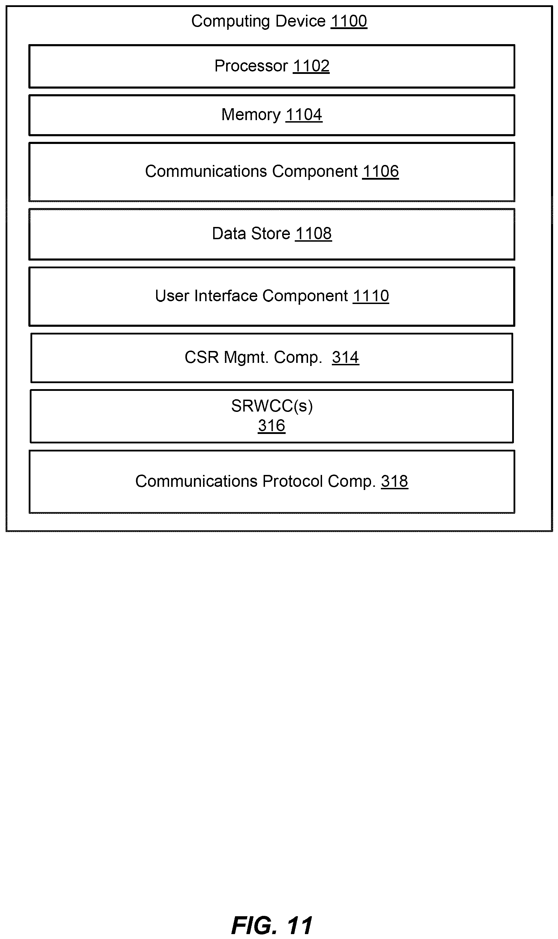

Referring to FIG. 6, in operation, the mobile configuration device 302 or the computing device 1100 may perform an example method 600 for providing network device certificate deployment using short-range communications. The method 600 may be performed by one or more components of the mobile configuration device 302, the computing device 1100, or any device/component described herein according to the techniques described with reference to FIGS. 3 and 11.

At block 602, the method 600 includes receiving a certificate signing request from a newly-added device to a private network via a first short range wireless communication. For example, the mobile configuration device 302 may receive the CSR 320 from the newly-added device using a short-range wireless communication channel. Accordingly, the mobile configuration device 302, the computing device 1100, and/or the processor(s) 1102 executing the short-range wireless communication components 316 may provide means for receiving the CSR from the newly-added device.

At block 604, the method 600 includes transmitting the certificate signing request to a certificate issuing device. For example, the mobile configuration device 302 may transmit the CSR 320 to the certificate issuing device 306. Accordingly, the mobile configuration device 302, the computing device 1100, and/or the processor(s) 1102 executing the communications protocol component 318 may provide means for transmitting the CSR to the certificate issuing device 306.

At block 606, the method 600 includes receiving, from the certificate issuing device, based on the certificate signing request, a digital certificate generated by the certificate issuing device. For example, the mobile configuration device 302 may receive the digital certificate 322 from the certificate issuing device 306 generated in response to the CSR 320. Accordingly, the mobile configuration device 302, the computing device 1100, and/or the processor(s) 1102 executing the communications protocol component 318 may provide means for receiving the digital certificate 322 from the certificate issuing device 306.

At block 608, the method 600 includes transmitting the digital certificate to the newly-added device via a second short range wireless communication, wherein the newly-added device and an existing device on the private network performing a handshake protocol based on the existing device verifying the digital certificate based on an issue certificate of the certificate issuing device. For example, the mobile configuration device 302 may transmit the digital certificate 322 to the newly-added device using a short-range wireless communication channel. Further, the newly-added device 304 and the existing device 308 may perform a handshake protocol, such as a TLS handshake, to establish a secure communication channel between the newly-added device 304 and the existing device 308 via the private network 310. Accordingly, the mobile configuration device 302, the computing device 1100, and/or the processor(s) 1102 executing the short-range wireless communication component 316 may provide means for transmitting the digital certificate 322 to the newly-added device 202.

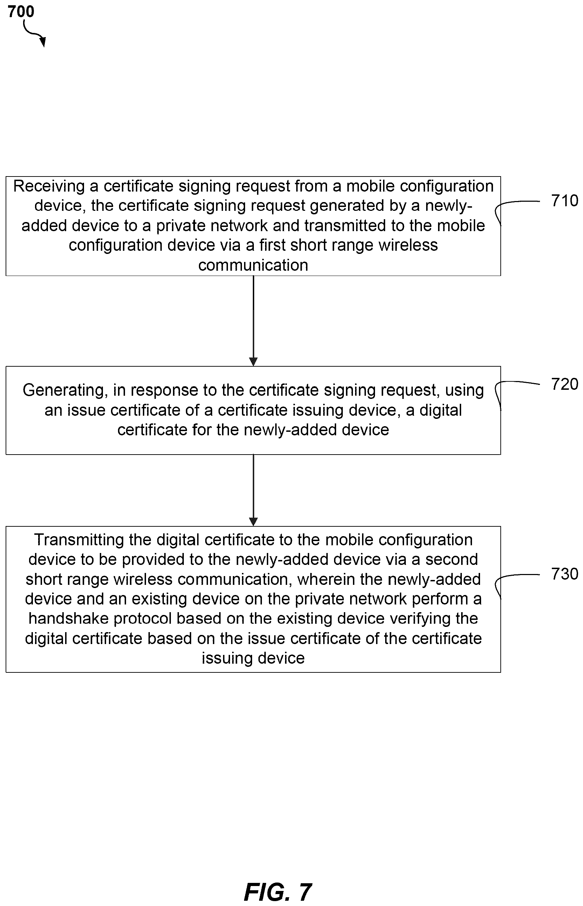

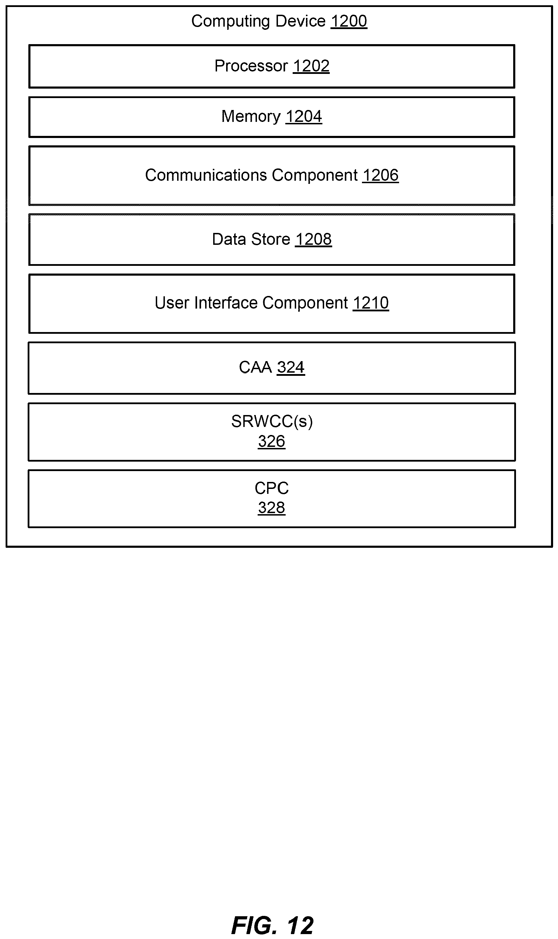

Referring to FIG. 7, in operation, the certificate issuing device 306 or the computing device 1200 may perform an example method 700 for providing network device certificate deployment using short-range communications. The method 700 may be performed by one or more components of the certificate issuing device 306, the computing device 1200, or any device/component described herein according to the techniques described with reference to FIGS. 3 and 12.

At block 702, the method 700 includes receiving a certificate signing request from a mobile configuration device, the certificate signing request generated by a newly-added device to a private network and transmitted to the mobile configuration device via a first short range wireless communication. For example, the certificate issuing device 306 may receive the CSR 320 from the mobile configuration device 302. As described herein, the CSR 320 is generated by a newly-added device 304 and transmitted to the mobile configuration device 302 via a first short-range wireless communication. Accordingly, the certificate issuing device 306, the computing device 1300, and/or the processor 1302 executing the communications protocol component 328 may provide means for receiving a certificate signing request from a mobile device, the certificate signing request generated by a newly-added device to a private network and transmitted to the mobile device via a first short range wireless communication.

At block 704, the method 700 includes generating, in response to the certificate signing request, using an issue certificate of a certificate issuing device, a digital certificate for the newly-added device. For example, the certificate issuing device 306 may generate the digital certificate 322 for the newly-added device 304 in response to receipt of the CSR 320. Accordingly, the certificate issuing device 306, the computing device 1200, and/or the processor(s) 1202 executing the CAA 324 may provide means for generating the digital certificate 322 in response to the CSR 320. The CID 306 receives a CSR 320 from the newly-added device 202.The CSR 320 includes the public key from the newly-added device 202. The CID 306, acting as a CA (certificate authority), is able to sign the newly-added device]s certificate using the private key of the CID 306. Any devices that trust the CA (CID 306) will already have the CA's public key. These devices will be able to confirm that the signed certificate for the newly-added device 202 could only have been generated by the CA (CID 306). A typical flow for certificate signing is as follows: device generates key pair (private and public key); CSR with public key sent to CA.

At block 706, the method 700 includes transmitting the digital certificate to the mobile configuration device to be provided to the newly-added device via a second short range wireless communication, wherein the newly-added device and an existing device on the private network perform a handshake protocol based on the existing device verifying the digital certificate based on the issue certificate of the certificate issuing device. For example, the certificate issuing device 306 may transmit the digital certificate 322 to the mobile configuration device 302. Accordingly, the certificate issuing device 306, the computing device 1200, and/or the processor(s) 1202 executing the communications protocol component 328 may provide means for transmitting the digital certificate to the mobile device to be provided to the newly-added device via a second short range wireless communication, wherein the newly-added device and an existing device on the private network perform a handshake protocol based on the existing device verifying the digital certificate based on the issue certificate of the certificate issuing device.

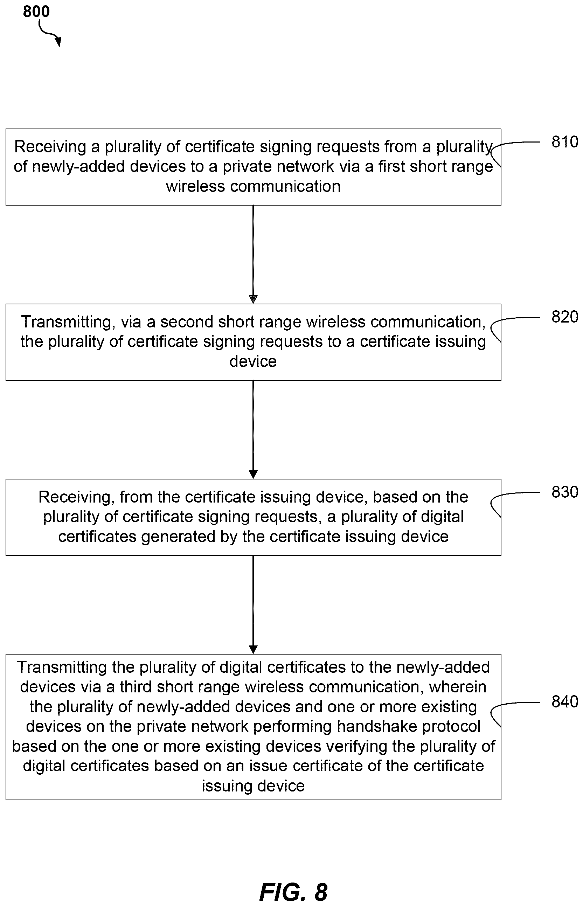

Referring to FIG. 8, in operation, the mobile configuration device 302 or the computing device 1100 may perform an example method 800 for providing network device certificate deployment using short-range communications. The method 800 may be performed by one or more components of the mobile configuration device 302, the computing device 1100, or any device/component described herein according to the techniques described with reference to FIGS. 3 and 11.

At block 802, the method 800 includes receiving a plurality of certificate signing requests from a plurality of newly-added devices to a private network via a first short range wireless communication. For example, the mobile configuration device 302 may receive a plurality of CSRs from multiple newly-added devices 304 via short-range wireless communication channels. Accordingly, the mobile configuration device 302, the computing device 1200, and/or the processor(s) 1202 may provide means for receiving the plurality of CSRs from the plurality of newly-added devices 304.

At block 804, the method 800 includes transmitting, via a second short range wireless communication, the plurality of certificate signing requests to a certificate issuing device. For example, the mobile configuration device 302 may transmit the plurality of CSRs to the certificate issuing device 306 via a second short-range wireless communication channel. Accordingly, the mobile configuration device 302, the computing device 1200, and/or the processor(s) 1202 executing the short-range wireless communication components 316 may provide means for transmitting the plurality of CSRs to the certificate issuing device 306.

At block 806, the method 800 includes receiving, from the certificate issuing device, based on the plurality of certificate signing requests, a plurality of digital certificates generated by the certificate issuing device. For example, the mobile configuration device 302 may receive multiple digital certificates for the newly-added devices 304 generated by the certificate issuing device 306 based on the received plurality of CSRs. Accordingly, the mobile configuration device 302, the computing device 1200, and/or the processor(s) 1202 executing the short-range wireless communication components 316 may provide means for receiving the plurality of digital certificates generated by the certificate issuing device 306.

At block 808, the method 800 includes transmitting the plurality of digital certificates to the newly-added devices via a third short range wireless communication, wherein the plurality of newly-added devices and one or more existing devices on the private network performing handshake protocol based on the one or more existing devices verifying the plurality of digital certificates based on an issue certificate of the certificate issuing device. For example, the mobile configuration device 302 may transmit the plurality of digital certificates to the newly-added devices 304 via third short-range wireless communication channels, enabling the newly-added devices 304 to securely communicate with existing devices on the private network. Accordingly, the mobile configuration device 302, the computing device 1200, and/or the processor(s) 1202 executing the short-range wireless communication components 316 may provide means for transmitting the plurality of digital certificates to the newly-added devices 304 and facilitating the performance of the handshake protocol between the newly-added devices 304 and the existing devices on the private network.

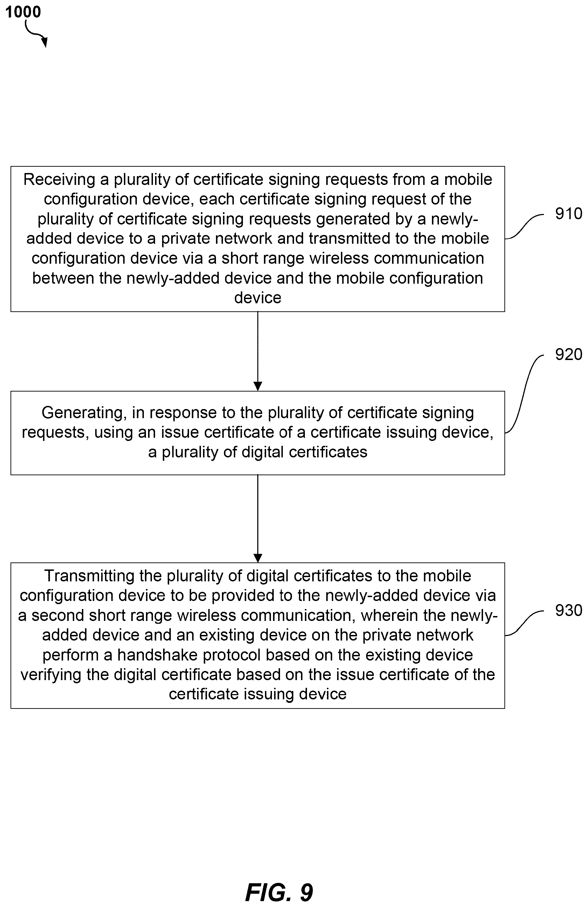

Referring to FIG. 9, in operation, the certificate issuing device 306 or the computing device 1200 may perform an example method 900 for network device certificate deployment using short-range communications. The method 900 may be performed by one or more components of the certificate issuing device 306, the computing device 1200, or any device/component described herein according to the techniques described with reference to FIGS. 3 and 12.

At block 902, the method 900 includes receiving a plurality of certificate signing requests from a mobile configuration device, each certificate signing request of the plurality of certificate signing requests generated by a newly-added device to a private network and transmitted to the mobile configuration device via a first short range wireless communication between the newly-added device and the mobile configuration device. For example, the certificate issuing device 306 may receive a plurality of CSRs from the mobile configuration device 302, which has obtained the CSRs from multiple newly-added devices 304 via short-range wireless communication channels. Accordingly, the certificate issuing device 306, the computing device 1200, and/or the processor(s) 1202 executing the short-range wireless communication components 326 may provide means for receiving the plurality of CSRs from the mobile configuration device 302.

At block 904, the method 900 includes generating, in response to the plurality of certificate signing requests, using an issue certificate of a certificate issuing device, a plurality of digital certificates. The certificate issuing device 306 processes the plurality of CSRs and generates the digital certificates based on the information in the CSRs and the issue certificate (e.g., a root certificate). Accordingly, the certificate issuing device 306, the computing device 1200, and/or the processor(s) 1202 executing the CAA 324 may provide means for generating the plurality of digital certificates in response to the received plurality of CSRs.

At block 906, the method 900 includes transmitting the plurality of digital certificates to the mobile configuration device to be provided to the newly-added device via a second short range wireless communication, wherein the newly-added device and an existing device on the private network perform a handshake protocol based on the existing device verifying the digital certificate based on the issue certificate of the certificate issuing device. The digital certificates are sent to the mobile configuration device 302, which will then provide the digital certificates to the newly-added devices 304 via a third short-range wireless communication. For example, the certificate issuing device 306 may transmit the plurality of digital certificates to the mobile configuration device 302. Accordingly, the certificate issuing device 306, the computing device 1200, and/or the processor(s) 1202 executing the short-range wireless communication components 326 may provide means for transmitting the plurality of digital certificates to the mobile configuration device 302.

Referring to FIG. 10, a computing device 1000 may implement all or a portion of the functionality described herein. The computing device 1000 may be or may include or may be configured to implement the functionality of at least a portion of the newly-added devices 102, 202, and 304, or any component therein. For example, the computing device 1000 may be or may include or may be configured to implement the credential generation component 112, one or more short-range wireless communication components (SRWCC) 114, the communications protocol component 116, the signing request (CSR) component 212, the one or more SRWCC 214, and the communications protocol component 216. The computing device 1000 includes processor(s) 1002 which may be configured to execute or implement software, hardware, and/or firmware modules that perform any functionality described herein. For example, the processor(s) 1002 may be configured to execute or implement software, hardware, and/or firmware modules that perform any functionality described herein with reference to the credential generation component 112, one or more short-range wireless communication components (SRWCC) 114, the communications protocol component 116, the signing request (CSR) component 212, the one or more short-range wireless communication components 214, the communications protocol component 216, or any other component/system/device described herein.

The processor(s) 1002 may be a micro-controller, an application-specific integrated circuit (ASIC), a digital signal processor (DSP), or a field-programmable gate array (FPGA), and/or may include a single or multiple set of processors or multi-core processors. Moreover, the processor(s) 1002 may be implemented as an integrated processing system and/or a distributed processing system. The computing device 1000 may further include a memory 1004, such as for storing local versions of applications being executed by the processor(s) 1002, related instructions, parameters, etc. The memory 1004 may include a type of memory usable by a computer, such as random access memory (RAM), read only memory (ROM), tapes, magnetic discs, optical discs, volatile memory, non-volatile memory, and any combination thereof. Additionally, the processor(s) 1002 and the memory 1004 may include and execute an operating system executing on the processor(s) 1002, one or more applications, display drivers, etc., and/or other components of the computing device 1000.

Further, the computing device 1000 may include a communications component 1006 that provides for establishing and maintaining communications with one or more other devices, parties, entities, etc. utilizing hardware, software, and services. The communications component 1006 may carry communications between components on the computing device 1000, as well as between the computing device 1000 and external devices, such as devices located across a communications network and/or devices serially or locally connected to the computing device 1000. In an aspect, for example, the communications component 1006 may include one or more buses, and may further include transmit chain components and receive chain components associated with a wireless or wired transmitter and receiver, respectively, operable for interfacing with external devices.

Additionally, the computing device 1000 may include a data store 1008, which can be any suitable combination of hardware and/or software, that provides for mass storage of information, databases, and programs. For example, the data store 1008 may be or may include a data repository for applications and/or related parameters not currently being executed by processor(s) 1002. In addition, the data store 1008 may be a data repository for an operating system, application, display driver, etc., executing on the processor(s) 1002, and/or one or more other components of the computing device 1000.

The computing device 1000 may also include a user interface component 1010 operable to receive inputs from a user of the computing device 1000 and further operable to generate outputs for presentation to the user (e.g., via a display interface to a display device). The user interface component 1010 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 1010 may include one or more output devices, including but not limited to a display interface, a speaker, a haptic feedback mechanism, a printer, any other mechanism capable of presenting an output to a user, or any combination thereof.

Referring to FIG. 11, a computing device 1100 may implement all or a portion of the functionality described herein. The computing device 1100 may be or may include or may be configured to implement the functionality of at least a portion of the mobile configuration devices 104, 204, and 302, or any component therein. For example, the computing device 1100 may be or may include or may be configured to implement the one or more short-range wireless communication components 124, the certificate authority application 222, one or more short-range wireless communication components 224, certificate signing request (CSR) management component 314, the one or more short-range wireless communication components 316, and the communications protocol component 318. The computing device 1100 includes one or more processor(s) 1102 which may be configured to execute or implement software, hardware, and/or firmware modules that perform any functionality described herein. For example, the processors 1102 may be configured to execute or implement software, hardware, and/or firmware modules that perform any functionality described herein with reference to the one or more short-range wireless communication components 124, the certificate authority application 222, one or more short-range wireless communication components 224, certificate signing request (CSR) management component 314, the one or more short-range wireless communication components 316, the communications protocol component 318, or any other component/system/device described herein.

The processor(s) 1102 may be a micro-controller, an application-specific integrated circuit (ASIC), a digital signal processor (DSP), or a field-programmable gate array (FPGA), and/or may include a single or multiple set of processors or multi-core processors. Moreover, the processor(s) 1102 may be implemented as an integrated processing system and/or a distributed processing system. The computing device 1100 may further include a memory 1104, such as for storing local versions of applications being executed by the processor(s) 1102, related instructions, parameters, etc. The memory 1104 may include a type of memory usable by a computer, such as random access memory (RAM), read only memory (ROM), tapes, magnetic discs, optical discs, volatile memory, non-volatile memory, and any combination thereof. Additionally, the processor(s) 1102 and the memory 1104 may include and execute an operating system executing on the processor(s) 1102, one or more applications, display drivers, etc., and/or other components of the computing device 1100.

Further, the computing device 1100 may include a communications component 1106 that provides for establishing and maintaining communications with one or more other devices, parties, entities, etc. utilizing hardware, software, and services. The communications component 1106 may carry communications between components on the computing device 1100, as well as between the computing device 1100 and external devices, such as devices located across a communications network and/or devices serially or locally connected to the computing device 1100. In an aspect, for example, the communications component 1106 may include one or more buses, and may further include transmit chain components and receive chain components associated with a wireless or wired transmitter and receiver, respectively, operable for interfacing with external devices.

Additionally, the computing device 1100 may include a data store 1108, which can be any suitable combination of hardware and/or software, that provides for mass storage of information, databases, and programs. For example, the data store 1108 may be or may include a data repository for applications and/or related parameters not currently being executed by processor(s) 1102. In addition, the data store 1108 may be a data repository for an operating system, application, display driver, etc., executing on the processor(s) 1102, and/or one or more other components of the computing device 1100.

The computing device 1100 may also include a user interface component 1110 operable to receive inputs from a user of the computing device 1100 and further operable to generate outputs for presentation to the user (e.g., via a display interface to a display device). The user interface component 1110 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 1110 may include one or more output devices, including but not limited to a display interface, a speaker, a haptic feedback mechanism, a printer, any other mechanism capable of presenting an output to a user, or any combination thereof.

Referring to FIG. 12, a computing device 1200 may implement all or a portion of the functionality described herein. The computing device 1200 may be or may include or may be configured to implement the functionality of at least a portion of the certificate issuing device 306, or any component therein. For example, the computing device 1200 may be or may include or may be configured to implement the certificate authority application 324, the one or more short-range wireless communication components 326, and the communications protocol component 328. The computing device 1200 includes one or more processor(s) 1202 which may be configured to execute or implement software, hardware, and/or firmware modules that perform any functionality described herein. For example, the processor(s) 1202 may be configured to execute or implement software, hardware, and/or firmware modules that perform any functionality described herein with reference to the certificate authority application 324, the one or more short-range wireless communication components 326, and the communications protocol component 328, or any other component/system/device described herein.

The processor(s) 1202 may be a micro-controller, an application-specific integrated circuit (ASIC), a digital signal processor (DSP), or a field-programmable gate array (FPGA), and/or may include a single or multiple set of processors or multi-core processors. Moreover, the processor(s) 1202 may be implemented as an integrated processing system and/or a distributed processing system. The computing device 1200 may further include a memory 1204, such as for storing local versions of applications being executed by the processor(s) 1202, related instructions, parameters, etc. The memory 1204 may include a type of memory usable by a computer, such as random access memory (RAM), read only memory (ROM), tapes, magnetic discs, optical discs, volatile memory, non-volatile memory, and any combination thereof. Additionally, the processor(s) 1202 and the memory 1204 may include and execute an operating system executing on the processor(s) 1202, one or more applications, display drivers, etc., and/or other components of the computing device 1200.

Further, the computing device 1200 may include a communications component 1206 that provides for establishing and maintaining communications with one or more other devices, parties, entities, etc. utilizing hardware, software, and services. The communications component 1206 may carry communications between components on the computing device 1200, as well as between the computing device 1200 and external devices, such as devices located across a communications network and/or devices serially or locally connected to the computing device 1200. In an aspect, for example, the communications component 1206 may include one or more buses, and may further include transmit chain components and receive chain components associated with a wireless or wired transmitter and receiver, respectively, operable for interfacing with external devices.

Additionally, the computing device 1200 may include a data store 1208, which can be any suitable combination of hardware and/or software, that provides for mass storage of information, databases, and programs. For example, the data store 1208 may be or may include a data repository for applications and/or related parameters not currently being executed by processor(s) 1202. In addition, the data store 1208 may be a data repository for an operating system, application, display driver, etc., executing on the processor(s) 1202, and/or one or more other components of the computing device 1200.

The computing device 1200 may also include a user interface component 1210 operable to receive inputs from a user of the computing device 1200 and further operable to generate outputs for presentation to the user (e.g., via a display interface to a display device). The user interface component 1210 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 1210 may include one or more output devices, including but not limited to a display interface, a speaker, a haptic feedback mechanism, a printer, any other mechanism capable of presenting an output to a user, or any combination thereof.

Deployment of TLS certificates to network devices is hampered by the problem of establishing initial trust. Trusting an unknown device (for example, a video camera or chiller) on first contact at a distance is a security risk. When the devices reside in a network shared with numerous other pieces of equipment, a user cannot safely trust a certificate and ensure that the certificate is not from a malicious device.

By using NFC (or other limited-range connection technologies), physical proximity makes it easier to establish trust and be sure that the proposed certificate is really coming from the intended device.

Scenario 1 (NFC only) Automatically trust the certificate already on the camera (e.g., newly-added device 304).

The NFC device (for example, a mobile phone) (e.g., mobile configuration device 302) would collect the existing untrusted certificate which will later be distributed to all clients (existing devices 308) that would need to communicate with the camera. The clients would add the certificate to their local trust store - either permanently, or temporarily as an intermediate step to deploy a trusted certificate directly to the NFC device.

Scenario 2 (NFC only) The phone acts as a certificate authority.

The mobile phone uses NFC to collect a certificate signing request (CSR) from the camera, issues a trusted certificate using its inbuilt CA, and uploads it to the camera. This can all be accomplished in a single visit. All devices that need to communicate with the camera already trust this CA, hence no need to collect/distribute anything to the clients.

Scenario 3 (NFC + WiFi / Mobile data) The phone relays the camera's CSR to a CA server (e.g., existing device 108) elsewhere.

The CA issues a trusted certificate, which is returned and uploaded to the camera. This requires extra connectivity.

Scenario 4 (NFC only) Batch mode CSR collection

The phone collects a CSR from each camera. The technician returns to a location where a CA is available and uploads the camera CSRs. The CA issues trusted certs for the cameras which are stored on the phone. The technician revisits the cameras and uploads the trusted certificates using NFC. The round trip requires two visits to each camera.

While various short range wireless communication technologies have been described with respect to the preceding examples herein, it is to be appreciated that any new or yet to be developed short range communication technology analogous to those described herein may be used.

Clause 1. An apparatus representing a newly-added device to a network of a communication system, the apparatus comprising: one or more memories; and one or more processors coupled with one or more memories and configured, , individually or in combination, to: generate a self-signed digital certificate; receive, from a mobile configuration device, via a first short range wireless communication, a request for the self-signed digital certificate; transmit, in response to the request, via a second short range wireless communication, the self-signed digital certificate to the mobile configuration device; and perform, via the self-signed digital certificate, a handshake protocol with an existing device on the network, the existing device having received the self-signed digital certificate from the mobile configuration device.

Clause 2. The apparatus in accordance with clause 1, wherein the first short range wireless communication and the second short range wireless communication involve different short range wireless communication technologies.

Clause 3. The apparatus in accordance with any preceding clauses, wherein the communication system is a video monitoring system, the newly-added device is a video capture device, and the existing device is any of (i) a storage device configured to manage storage of video capture information from the video capture device and (ii) a client device configured to permit view the video capture information.

Clause 4. The apparatus in accordance with any preceding clauses, wherein the handshake protocol is based on the existing device verifying the self-signed digital certificate using an issue certificate of a certificate issuing device.

Clause 5. The apparatus in accordance with any preceding clauses, wherein the self-signed digital certificate comprises a domain name, organization details, a validity period of the self-signed digital certificate, and a digital signature of a certificate issuing device (CID) that issued the self-signed digital certificate.

Clause 6. The apparatus in accordance with any preceding clauses, wherein the self-signed digital certificate identifies the newly-added device.

Clause 7. A method performed by a newly-added device to a network of a communication system, the method comprising: generating a self-signed digital certificate; receiving, from a mobile configuration device, via a first short range wireless communication, a request for the self-signed digital certificate; transmitting, in response to the request, via a second short range wireless communication, the self-signed digital certificate to the mobile configuration device; and performing, via the self-signed digital certificate, a handshake protocol with an existing device on the network, the existing device having received the self-signed digital certificate from the mobile configuration device.

Clause 8. The method in accordance with any preceding clauses, wherein the first short range wireless communication and the second short range wireless communication involve different short range wireless communication technologies.

Clause 9. The method in accordance with any preceding clauses, wherein the communication system is a video monitoring system, the newly-added device is a video capture device, and the existing device is any of (i) a storage device configured to manage storage of video capture information from the video capture device and (ii) a client device configured to permit viewing the video capture information.

Clause 10. The method in accordance with any preceding clauses, wherein the handshake protocol is based on the existing device verifying the self-signed digital certificate using an issue certificate of a certificate issuing device.

Clause 11. The method in accordance with any preceding clauses, wherein the self-signed digital certificate comprises a domain name, organization details, a validity period of the self-signed digital certificate, and a digital signature of a certificate issuing device (CID) that issued the self-signed digital certificate.

Clause 12. The method in accordance with any preceding clauses, wherein the self-signed digital certificate identifies the newly-added device.

Clause 13. An apparatus representing a newly-added device to a network of a communication system, the apparatus comprising: one or more memories; and one or more processors coupled with one or more memories and configured, , individually or in combination, to: transmit, to a mobile configuration device, via a first short range wireless communication, a certificate signing request; receive, from the mobile configuration device, via a second short range wireless communication, a digital certificate generated by a certificate authority installed on the mobile configuration device; and perform, via the digital certificate, a handshake protocol with an existing device on the network, wherein the digital certificate is verifiable by the existing device using an issue certificate of the mobile configuration device.

Clause 14. The apparatus in accordance with clause 13, wherein the first short range wireless communication and the second short range wireless communication involve different short range wireless communication technologies.

Clause 15. The apparatus in accordance with any preceding clauses, wherein the communication system is a video monitoring system, the newly-added device is a video capture device, and the existing device is any of (i) a storage device configured to manage storage of video capture information from the video capture device and (ii) a client device configured to permit view the video capture information.

Clause 16. The apparatus in accordance with any preceding clauses, wherein the handshake protocol is based on the existing device verifying the digital certificate using an issue certificate of a certificate issuing device.

Clause 17. The apparatus in accordance with any preceding clauses, wherein the handshake protocol comprises a Transport Layer Security handshake protocol.

Clause 18. The apparatus in accordance with any preceding clauses, wherein the handshake protocol comprises a Transport Layer Security (TLS) handshake protocol and the issue certificate is a TLS certificate.

Clause 19. A method performed by a newly-added device to a network of a communication system, the method comprising: transmitting, to a mobile configuration device, via a first short range wireless communication, a certificate signing request; receiving, from the mobile configuration device, via a second short range wireless communication, a digital certificate generated by a certificate authority installed on the mobile configuration device; and performing, via the digital certificate, a handshake protocol with an existing device on the network, wherein the digital certificate is verifiable by the existing device using an issue certificate of the mobile configuration device.

Clause 20. The method in accordance with clause 19, wherein the first short range wireless communication and the second short range wireless communication involve different short range wireless communication technologies.

Clause 21. The method in accordance with any preceding clauses, wherein the communication system is a video monitoring system, the newly-added device is a video capture device, and the existing device is any of (i) a storage device configured to manage storage of video capture information from the video capture device and (ii) a client device configured to permit viewing the video capture information.

Clause 22. The method in accordance with clause 19, wherein the handshake protocol is based on the existing device verifying the digital certificate using an issue certificate of a certificate issuing device.

Clause 23. The method in accordance with any preceding clauses, wherein the handshake protocol comprises a Transport Layer Security handshake protocol.

Clause 24. The method in accordance with any preceding clauses, wherein the handshake protocol comprises a Transport Layer Security (TLS) handshake protocol and the issue certificate is a TLS certificate.

Clause 25. An apparatus representing a mobile configuration device in a network of a communication system, the apparatus comprising: one or more memories; and one or more processors coupled with one or more memories and configured, , individually or in combination, to: receive a certificate signing request from a newly-added device to the network via a first short range wireless communication; transmit the certificate signing request to a certificate issuing device; receive, from the certificate issuing device, based on the certificate signing request, a digital certificate generated by the certificate issuing device; and transmit the digital certificate to the newly-added device via a second short range wireless communication, wherein the digital certificate is configured to enable the newly-added device and an existing device on the network to perform a handshake protocol based on the existing device verifying the digital certificate based on an issue certificate of the certificate issuing device.

Clause 26. The apparatus in accordance with clause 25, wherein the first short range wireless communication and the second short range wireless communication involve different short range wireless communication technologies.

Clause 27. The apparatus in accordance with any preceding clauses, wherein the one or more processors are further configured to exchange additional information with the newly-added device using a different communication than a communication used for the digital certificate used to authenticate the newly-added device and verifying that the digital certificate is provided by the newly-added device.

Clause 28. The apparatus in accordance with any preceding clauses, further comprising displaying a code or digital certificate to the newly-added device and determining whether to accept the code or the digital certificate for distribution based on use of the code or the digital certificate by the newly-added device.

Clause 29. The apparatus in accordance with any preceding clauses, wherein the code is a quick response (QR) code.

Clause 30. A method performed by a mobile configuration device in a network of a communication system, the method comprising: receiving a certificate signing request from a newly-added device to the network via a first short range wireless communication; transmitting the certificate signing request to a certificate issuing device; receiving, from the certificate issuing device, based on the certificate signing request, a digital certificate generated by the certificate issuing device; and transmitting the digital certificate to the newly-added device via a second short range wireless communication, wherein the digital certificate is configured to enable the newly-added device and an existing device on the network to perform a handshake protocol based on the existing device verifying the digital certificate based on an issue certificate of the certificate issuing device.

Clause 31. The method in accordance with clause 30, wherein the first short range wireless communication and the second short range wireless communication involve different short range wireless communication technologies.

Clause 32. The method in accordance with any preceding clauses, further comprising exchanging additional information with the newly-added device using a different communication than a communication used for the digital certificate used to authenticate the newly-added device and verifying that the digital certificate is provided by the newly-added device.

Clause 33. The method in accordance with any preceding clauses, further comprising displaying a code or digital certificate to the newly-added device and determining whether to accept the code or the digital certificate for distribution based on use of the code or the digital certificate by the newly-added device.

Clause 34. The method in accordance with any preceding clauses, wherein the code is a quick response (QR) code.

Clause 35. An apparatus representing a certificate issuing device in a network of a communication system, the apparatus comprising: one or more memories; and one or more processors coupled with one or more memories and configured, , individually or in combination, to: receive a certificate signing request from a mobile configuration device, the certificate signing request generated by a newly-added device to the network and transmitted to the mobile configuration device via a first short range wireless communication; generate, in response to the certificate signing request, using an issue certificate of the certificate issuing device, a digital certificate for the newly-added device; and transmit the digital certificate to the mobile configuration device to be provided to the newly-added device via a second short range wireless communication, wherein the digital certificate is configured to enable the newly-added device and an existing device on the network to perform a handshake protocol based on the existing device verifying the digital certificate based on the issue certificate of the certificate issuing device.

Clause 36. The apparatus in accordance with clause 35, wherein the first short range wireless communication and the second short range wireless communication involve different short range wireless communication technologies.

Clause 37. The apparatus in accordance with any preceding clauses, wherein the handshake protocol comprises a Transport Layer Security (TLS) handshake protocol and the issue certificate is a TLS certificate.

Clause 38. A method performed by a certificate issuing device in a network of a communication system, the method comprising: receiving a certificate signing request from a mobile configuration device, the certificate signing request generated by a newly-added device to the network and transmitted to the mobile configuration device via a first short range wireless communication; generating, in response to the certificate signing request, using an issue certificate of the certificate issuing device, a digital certificate for the newly-added device; and transmitting the digital certificate to the mobile configuration device to be provided to the newly-added device via a second short range wireless communication, wherein the digital certificate is configured to enable the newly-added device and an existing device on the network to perform a handshake protocol based on the existing device verifying the digital certificate based on the issue certificate of the certificate issuing device.

Clause 39. The method in accordance with clause 38, wherein the first short range wireless communication and the second short range wireless communication involve different short range wireless communication technologies.

Clause 40. The method in accordance with any preceding clauses, wherein the handshake protocol comprises a Transport Layer Security (TLS) handshake protocol and the issue certificate is a TLS certificate.

Clause 41. An apparatus representing a newly-added device to a network of a communication system, the apparatus comprising: means for generating a self-signed digital certificate; means for receiving, from a mobile configuration device, via a first short range wireless communication, a request for the self-signed digital certificate; means for transmitting, in response to the request, via a second short range wireless communication, the self-signed digital certificate to the mobile configuration device; and means performing, via the self-signed digital certificate, a handshake protocol with an existing device on the network, the existing device having received the self-signed digital certificate from the mobile configuration device.

Clause 42. A computer-readable medium in a newly-added device to a network of a communication system, the computer-readable medium storing computer executable code, comprising code to: generate a self-signed digital certificate; receive, from a mobile configuration device, via a first short range wireless communication, a request for the self-signed digital certificate; transmit, in response to the request, via a second short range wireless communication, the self-signed digital certificate to the mobile configuration device; and perform, via the self-signed digital certificate, a handshake protocol with an existing device on the network, the existing device having received the self-signed digital certificate from the mobile configuration device.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus representing a newly-added device to a network of a communication system, the apparatus comprising:
one or more memories; and
one or more processors coupled with one or more memories and configured, , individually or in combination, to:
generate a self-signed digital certificate;
receive, from a mobile configuration device, via a first short range wireless communication, a request for the self-signed digital certificate;
transmit, in response to the request, via a second short range wireless communication, the self-signed digital certificate to the mobile configuration device; and
perform, via the self-signed digital certificate, a handshake protocol with an existing device on the network, the existing device having received the self-signed digital certificate from the mobile configuration device.

2. The apparatus in accordance with claim 1, wherein the first short range wireless communication and the second short range wireless communication involve different short range wireless communication technologies.

3. The apparatus in accordance with claim 1, wherein the communication system is a video monitoring system, the newly-added device is a video capture device, and the existing device is any of (i) a storage device configured to manage storage of video capture information from the video capture device and (ii) a client device configured to permit view the video capture information.

4. The apparatus in accordance with claim 1, wherein the handshake protocol is based on the existing device verifying the self-signed digital certificate using an issue certificate of a certificate issuing device.

5. The apparatus in accordance with claim 1, wherein the self-signed digital certificate comprises a domain name, organization details, a validity period of the self-signed digital certificate, and a digital signature of a certificate issuing device (CID) that issued the self-signed digital certificate.

6. The apparatus in accordance with claim 1, wherein the self-signed digital certificate identifies the newly-added device.

7. An apparatus representing a newly-added device to a network of a communication system, the apparatus comprising:
one or more memories; and
one or more processors coupled with one or more memories and configured, , individually or in combination, to:
transmit, to a mobile configuration device, via a first short range wireless communication, a certificate signing request;
receive, from the mobile configuration device, via a second short range wireless communication, a digital certificate generated by a certificate authority installed on the mobile configuration device; and
perform, via the digital certificate, a handshake protocol with an existing device on the network, wherein the digital certificate is verifiable by the existing device using an issue certificate of the mobile configuration device.

8. The apparatus in accordance with claim 7, wherein the communication system is a video monitoring system, the newly-added device is a video capture device, and the existing device is any of (i) a storage device configured to manage storage of video capture information from the video capture device and (ii) a client device configured to permit view the video capture information.

9. The apparatus in accordance with claim 7, wherein the handshake protocol is based on the existing device verifying the digital certificate using an issue certificate of a certificate issuing device.

10. The apparatus in accordance with claim 7, wherein the handshake protocol comprises a Transport Layer Security handshake protocol.

11. An apparatus representing a mobile configuration device in a network of a communication system, the apparatus comprising:
one or more memories; and
one or more processors coupled with one or more memories and configured, , individually or in combination, to:
receive a certificate signing request from a newly-added device to the network via a first short range wireless communication;
transmit the certificate signing request to a certificate issuing device;
receive, from the certificate issuing device, based on the certificate signing request, a digital certificate generated by the certificate issuing device; and
transmit the digital certificate to the newly-added device via a second short range wireless communication, wherein the digital certificate is configured to enable the newly-added device and an existing device on the network to perform a handshake protocol based on the existing device verifying the digital certificate based on an issue certificate of the certificate issuing device.

12. The apparatus in accordance with claim 11, wherein the first short range wireless communication and the second short range wireless communication involve different short range wireless communication technologies.

13. The apparatus in accordance with claim 11, wherein the one or more processors are further configured to exchange additional information with the newly-added device using a different communication than a communication used for the digital certificate used to authenticate the newly-added device and verifying that the digital certificate is provided by the newly-added device.

14. The apparatus in accordance with claim 11, further comprising displaying a code or digital certificate to the newly-added device and determining whether to accept the code or the digital certificate for distribution based on use of the code or the digital certificate by the newly-added device, and more specifically
wherein the code is a quick response (QR) code.

15. An apparatus representing a certificate issuing device in a network of a communication system, the apparatus comprising:
one or more memories; and
one or more processors coupled with one or more memories and configured, , individually or in combination, to:
receive a certificate signing request from a mobile configuration device, the certificate signing request generated by a newly-added device to the network and transmitted to the mobile configuration device via a first short range wireless communication;
generate, in response to the certificate signing request, using an issue certificate of the certificate issuing device, a digital certificate for the newly-added device; and
transmit the digital certificate to the mobile configuration device to be provided to the newly-added device via a second short range wireless communication, wherein the digital certificate is configured to enable the newly-added device and an existing device on the network to perform a handshake protocol based on the existing device verifying the digital certificate based on the issue certificate of the certificate issuing device.

16. The apparatus in accordance with claim 7 or 15, wherein the first short range wireless communication and the second short range wireless communication involve different short range wireless communication technologies.

17. The apparatus in accordance with claim 7 or 15, wherein the handshake protocol comprises a Transport Layer Security (TLS) handshake protocol and the issue certificate is a TLS certificate.
